# EUROPEAN PATENT APPLICATION

(11) **EP 3 293 926 A1**
(43) Date of publication of application: **14.03.2018**
(21) Application number: 16290164.9
(22) Date of filing: 07.09.2016
(51) Int. Cl.: H04L 12/701

(54) **SYSTEM FOR STORING GRAPH DATA STRUCTURES**

(71) Applicant: ALCATEL LUCENT, 92100 Boulogne-Billancourt (FR)
(72) Inventor: Sarkar, Souradip, 2018 Antwerpen (BE); Pianese, Fabio, 91620 Nozay (FR)
(74) Representative: Plas, Axel Ivo Michel

(57) **Abstract**

The disclosure relates to a computing system comprising a ternary content-addressable memory, TCAM and a processing unit configured to perform the step of storing a graph comprising vertices (202, 204) and edges (201, 205, 203) in the TCAM.

Fig 2. to be published with abstract.

## Description

### Technical Field

The present invention generally relates to the field of graph databases. A graph database is a computer architecture that allows storing and searching a graph data structure. Such computer architecture typically combines software and hardware to achieve this goal. A graph data structure or shortly a graph is a way of presenting information in the form of vertices that are interconnected by edges. Both vertices and edges may further be annotated, i.e., certain properties may be linked to the vertices and/or edges.

### Background

A network topology can be represented by a graph wherein the physical or virtual endpoints are represented by the graph's vertices and the links or flows between the endpoints are represented by the graph's edges. Further application of graph databases can also be found in cloud computing, social networks and other kinds of analytics which depend on repeated traversal through and searches on a graph data structure.

A typical challenge with graph databases is the speed at which complex graph algorithms can be solved, for example the Dijkstra, Bellman-Ford, Floyd-Warshall or Spanning Tree algorithm. High speeds are necessary to enable the implementation of centralized network control architectures such as Software Defined Networking (SDN) for Core or Access networks.

### Summary

A known approach in graph databases is to use standard array of matrix based memory architectures for storing graphs. Such memory architectures are the generic memory subsystem used in commodity computing and applied in SRAMs, DRAM or most Non-Volatile Memories (NVMs). Because the many-dimensional graph topology gets represented in a regular two-dimensional matrix structure, the inherent property of neighbourhood among the graph elements is lost. This leads to large searching times for traversing a graph and fragmentation when changing vertices and edges in the graphs. Fragmentation again leads to a decrease in access efficiency.

It is an object of the present invention to alleviate the above drawbacks and to provide a graph database architecture that allows rapid searching and that keeps its efficiency when changing, adding or removing vertices and edges in the graph.

This object is achieved, according to a first aspect, by a computing system comprising a ternary content-addressable memory, TCAM and a processing unit configured to perform the step of storing a graph comprising vertices and edges in the TCAM.

A Content-addressable memory (CAM) is a type of computer memory. It is also referred to as an associative memory, an associative storage or an associative array. In a CAM, lines of data are stored. In contrast to an addressable memory, the lines cannot be retrieved by addresses uniquely identifying a line of data. In order to access the CAM, a search line is issued to the CAM which compares the search line with all the lines stored in the CAM. As a result the matching data is returned. A ternary content addressable memory or shortly TCAM is a special type of CAM. A TCAM allows a 'don't care' state or X state to be specified in the search line. When fields in a search line specify such an X state, the TCAM result will always match for these fields. The 'don't care' or X state may thus be seen as wildcard matches in the CAM, thereby extending the search capabilities of a CAM.

By storing a graph in a TCAM, the parallel searching capabilities of the TCAM can be exploited for traversing the graph resulting in a constant time complexity in searching for neighbouring vertices and edges.

The graph may for example correspond to a network topology graph or hypergraph.

According to an embodiment the storing further comprises:
- storing a vertex as a vertex line in the TCAM; and wherein the vertex line comprises a vertex field comprising an identification of the vertex and an adjacent edge field comprising and identification of one or more adjacent edges to the vertex; and
- storing an edge as an edge line in the TCAM; and wherein the edge line comprises an edge field comprising an identification of the edge and an adjacent vertex field comprising an identification of connected vertices.

There are thus two types of lines used for representing the graph in the TCAM, i.e., the vertex line and the edge line. The vertex line identifies the respective vertex and its adjacent edges. The edge line identifies the respective edge and the adjacent vertices, i.e., the vertices connected by the respective edge. The graph is thus represented by a minimal amount of data, making it possible to store the edges and vertices into single lines which typically have a size of 300 to 600 bits.

Searching edges adjacent to a first vertex may then be performed by the computing system by issuing a first vertex search line to the TCAM. The vertex field of the first vertex search line then identifies the first vertex and the adjacent edge field of the first vertex search line is then indicated with a wildcard.

In other words, when the vertex is known, the adjacent edges can be retrieved by a single search line. Due to the parallel searching architecture of a TCAM, such a search may always be performed in a single cycle.

Accordingly, searching vertices adjacent to a first edge may then be performed by the computing system by issuing a first edge search line to the TCAM. The edge field of the first edge search line then identifies the first edge and the adjacent vertex field of the first edge search line is then indicated with a wildcard.

According to an embodiment, the processing unit is further configured to perform the following steps:
- receiving, from the TCAM, a first result vertex line with the first vertex as the vertex field; and
- retrieving from the adjacent edge field of the first result vertex line an identification of one or more first edges adjacent to the first vertex; and
- issuing for each of the one or more first edges a first edge search line to the TCAM; and
- receiving, from the TCAM, first result edge lines with the respective first edges as the edge field.

In other words, when a vertex is retrieved from the TCAM, the adjacent edges are identified and retrieved on their turn from the TCAM. This process may then be repeated by retrieving the adjacent vertices from the edges in order to traverse the graph. This way, traversing the graph has a constant time complexity.

The vertex line may further comprise a vertex property field comprising vertex property information and the edge line may further comprise an edge property field comprising edge property information.

Thus, the TCAM does not only identify the vertices and edges but also store information about the vertices and edges. For example, for a network topology graph, the edge property information may comprise the port availability, bandwidth or latency. This has the advantage that no further search cycles are needed to retrieve further information about the edges and properties.

According to an embodiment, the computing system further comprising an addressable memory. The vertex line then further comprises a vertex property field comprising a vertex property reference to vertex property information; and wherein the edge line further comprises an edge property field comprising a reference to edge property information and wherein the storing further comprises:
- storing vertex property information of the vertex in the addressable memory; and
- storing a reference to the vertex property information of the vertex in the vertex property field of the vertex; and
- storing edge property information of the edge in the addressable memory; and
- storing a reference to the edge property information of the edge in the edge property field of the edge.

The property information is thus not necessarily installed in the TCAM lines, but the lines may contain a reference, for example a pointer, to the property information that is stored in an addressable memory such as an SRAM of DRAM. This has the advantage that the constant time searching capabilities of the TCAM are combined with the large storage available in an addressable memory. This leaves more space for adjacency information and facilitates storing property information that is larger than the typical 300 to 600 bits size of the TCAM lines.

According to a further embodiment, the computing system further comprises an address adjacency encoder and address decoder. The address adjacency encoder is further configured to perform the steps of:
- receiving, from the TCAM, a first result vertex line with the first vertex as the vertex field; and
- retrieving from the adjacent edge field of the first result vertex line an identification of one or more first edges adjacent to the first vertex;
   and wherein the address decoder is configured to perform the step of:
- decoding the address of the edge property information in the addressable memory from the identification of one or more first edges adjacent to the first vertex;
   and wherein the addressable memory is further conjured to perform the step of:
- looking up the edge property information of the one or more first edges adjacent to the first vertex by the address of the edge property information;
- providing the edge property information to the processing unit.

The TCAM and addressable memory are thus interconnected by the address adjacency encoder and the address decoder. This way, in order to retrieve information on adjacent edges, only a single lookup in the TCAM is needed. The result line identifying the vertex is then sent to the address adjacency encoder where all adjacent edges are identified from the adjacent edge field. The addresses of the adjacent edges' property information are then decoded by the address decoder and the respective property information is then looked up in the addressable memory. This has the advantage that a set of adjacent edges together with their property information can be retrieved by a single TCAM search. The property information is further not limited by the size of a TCAM line.

Advantageously, the addressable memory is a multi-bank memory and configured to perform multiple lookups in the multi-bank memory in parallel. This way, when information about one than more edge is looked up, this can be done in a single lookup cycle.

Accordingly the storing then further comprises storing the edge property information of adjacent edges in different banks of the multi-bank memory. The looking up the edge property information is then performed in parallel.

In order to take most advantage of the multi-bank memory, property information of adjacent edges is stored in different memory banks. This way, only a single cycle is needed when looking up property information of adjacent edge resulting in a single cycle for a step in traversing the graph.

According to a second aspect, a method is disclosed for storing a graph comprising vertices and edges on a computing system. The method comprising storing the graph in a ternary content-addressable memory, TCAM.

According to a third aspect, a computer program product is disclosed comprising a computer-executable instructions for performing the method according to the second aspect when the program is run on a computer.

According to a fourth aspect, a computer readable storage medium is disclosed comprising the computer program product according to the third aspect.

According to a fifth aspect, a data processing system is disclosed programmed for carrying out the method according to the second aspect.

### Brief Description of the Drawings

Fig. 1 illustrates an example of a graph;
Fig. 2 illustrates the graph of Fig. 1 as stored in a TCAM; and
Fig. 3 illustrates a computing system for storing and searching a graph according to a first embodiment; and
Fig. 4 illustrates a computing system for storing and searching a graph according to second embodiment; and
Fig. 5 illustrates steps performed for storing a vertex or edge in a computing system according an embodiment; and
Fig. 6 illustrates steps performed for removing a vertex or edge from a graph stored in a computing system according to an embodiment; and
Fig. 7 illustrates steps performed for traversing a graph stored in the computing system according to Fig. 3; and
Fig. 8 illustrates steps performed for traversing a graph stored in the computing system according to Fig. 4; and
Fig. 9 illustrates the graph from Fig. 1 as stored in the computing system according to Fig. 4.

### Detailed Description of Embodiment(s)

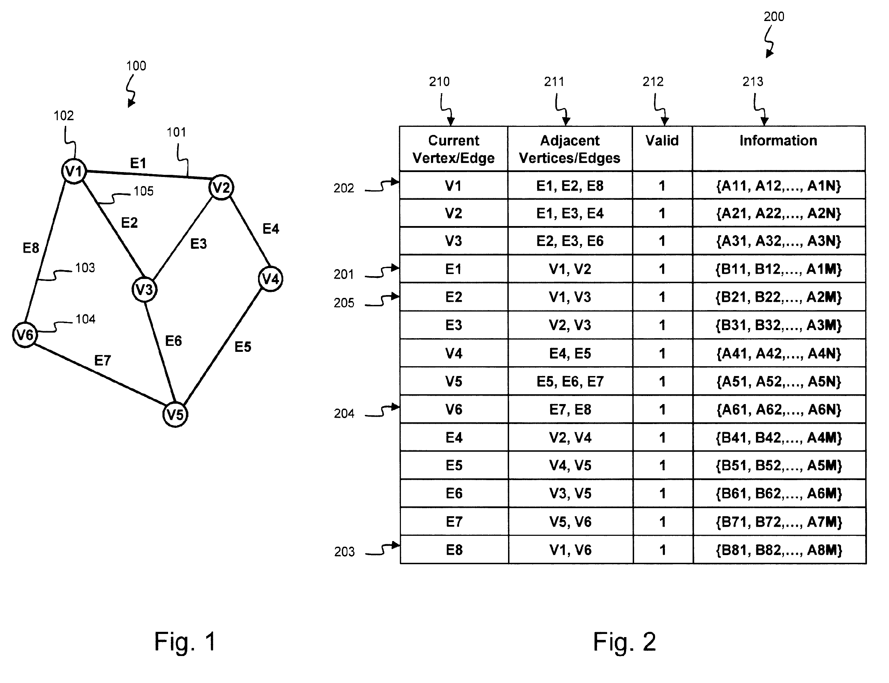

The present disclosure relates to the storage of graphs in a graph database. Fig. 1 illustrates an example of a graph 100 that will be used to illustrate the further embodiments below. Graph 100 comprises six vertices V1 to V6 interconnected by edges E1 to E8.

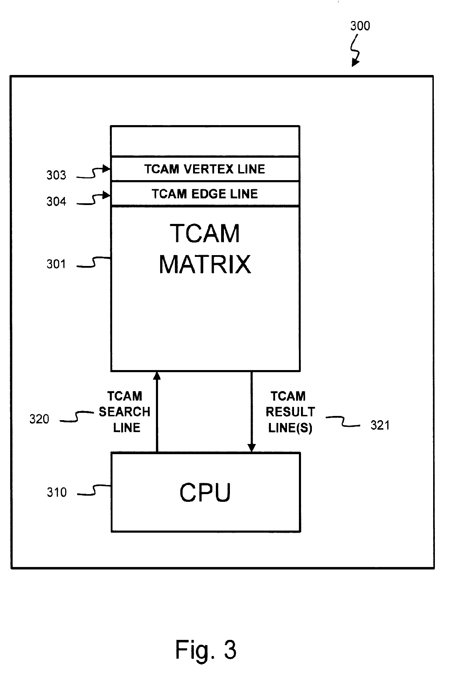

Fig. 3 illustrates a computing system 300 according to a first embodiment for the storage of graphs, for example graph 100. Computing system 300 comprises a central processing unit or CPU 310, further referred to as processing unit 310. Computing system 300 further comprises a ternary content-addressable memory or TCAM 301. Processing unit 310 and TCAM 301 are configured such that processing unit 310 can issue search lines 320 to the TCAM 301 and receive one or more TCAM result lines 321 in return that match the issued search lines 320.

CPU 310 is further configured to store a graph into the TCAM 301 according to a certain data structure. Fig. 2 illustrates how graph 100 is stored in TCAM 301 according to the data structure 200. Each line, e.g., lines 201 to 205, in the data structure 200 correspond to a memory line 303, 304 in the TCAM. The columns 210 to 213 correspond to predetermined fields in the TCAM lines.

A vertex is represented as a single line in the TCAM and comprises the following fields:
- A current vertex field 210 identifying the respective vertex in the graph. This may for example be a pointer or a unique number.
- An adjacent edges field 211 identifying the edges adjacent to the respective vertex.
- An optional valid field 212 indicating whether the line is a valid entry in the TCAM. This field may be used for removing vertices from the graph by toggling the valid field to zero.
- An optional information field 213 comprising further property information about the respective vertex.

For example, vertices 102 and 104 are represented by TCAM lines 202 and 204.

An edge is also represented as a single line in the TCAM in a similar way and comprises the following fields:
- A current edge field 210 identifying the respective edge in the graph. This may for example be a pointer or a unique number.
- An adjacent vertices field 211 identifying the vertices connected by the respective edge.
- An optional valid field 212 indicating whether the line is a valid entry in the TCAM. This field may be used for removing edges from the graph by toggling the valid field to zero.
- An optional information field 213 comprising further property information about the respective edge.
For example, edges 101, 103 and 105 are represented by TCAM lines 201, 203 and 205.

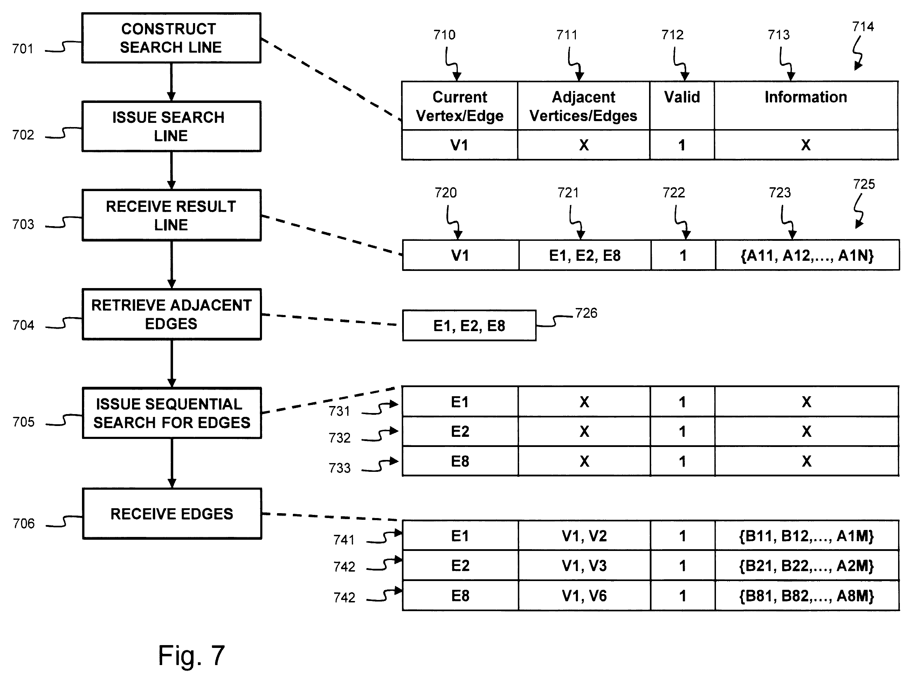

Fig. 7 illustrates steps 701 to 706 performed by computing system 300 when traversing a graph stored in the TCAM 301. These steps are further illustrated by an example where the edges of vertex 102 of graph 100 are searched for. In a first step 701, the processing unit 310 constructs a TCAM search line 714 to a certain edge or vertex. In the search line 714, vertex V1 is specified in the current vertex field 710, the adjacent edges field 711 is marked as 'don't care' or X, the valid field 712 specifies '1' or thus valid and the information field 713 is also marked as 'don't care' or X. The search line 714 is then issued to the TCAM 301 in step 702 and the TCAM performs the search, i.e., it compares the search line 714 with all entries in the TCAM 301. A matched line is found in the TCAM 301 when the fields in the search line corresponds with an entry in the TCAM. When a field in the search line is marked as X, then the corresponding field in the TCAM will always match the search. By specifying the valid field 712 as 'valid', the search will only return valid lines, i.e., vertices and edges belonging to graph 100.

In step 703, the processing unit 310 receives the result 725 of the search form the TCAM 301, i.e., the line representing the respective vertex or edge that was searched for. Therefore, the result 725 will correspond with line 202 from the TCAM comprising fields 720 to 723. Subsequently, in step 704 processing unit 310 retrieves an identification of the adjacent edges 726 from the result line's adjacent edges field 721. Subsequently, in step 705, processing unit 310 issues search lines 731, 732 and 733 for retrieving respective TCAM lines 201, 205 and 203 from the TCAM 301. Subsequently, in step 706, the processing unit 310 receives the result lines 741, 742 and 743.

In a similar way, steps 701 to 706 may be used to search for vertices that are connected to a certain edge. This way, graph 100 may be further traversed starting from the retrieved edges 101, 103 and 105.

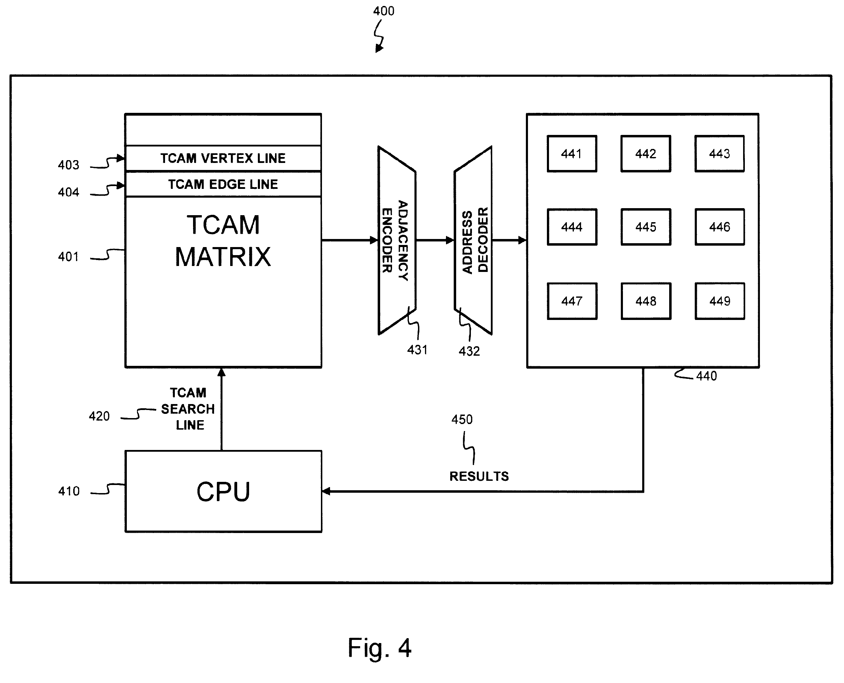

Fig. 4 illustrates a computing system 400 according to a second embodiment for the storage of graphs, for example graph 100. Computing system 400 comprises a central processing unit or CPU 410, further referred to as processing unit 410, a ternary content-addressable memory or TCAM 401, an adjacency encoder 431, an address decoder 432 and a multi-bank memory 440 comprising memory banks 441 to 449.

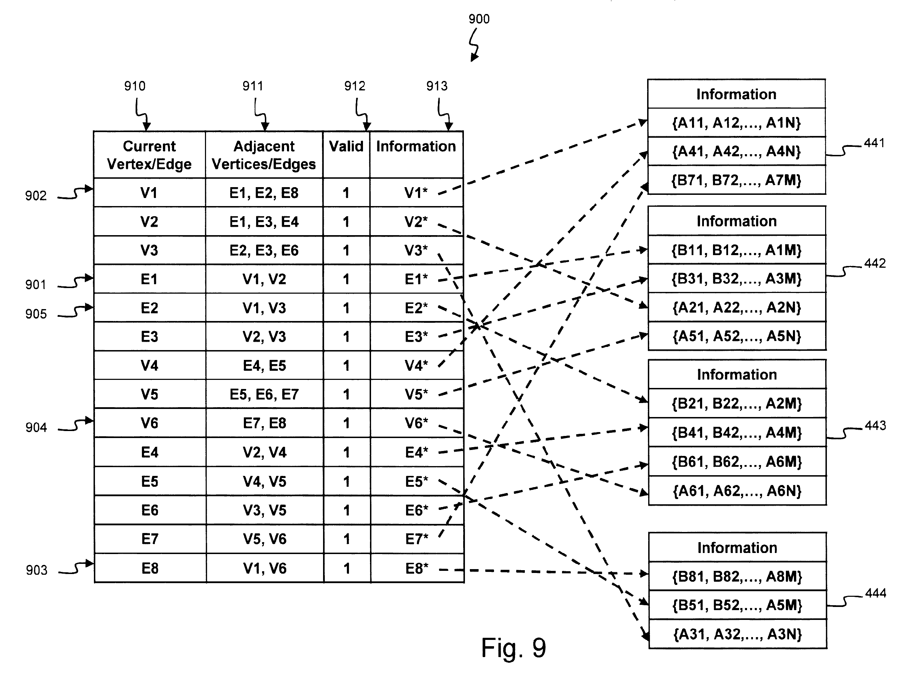

CPU 410 is further configured to store a graph into the TCAM 401 and multi-bank memory 440 according to a certain data structure. Fig. 9 illustrates how graph 100 is stored in TCAM 401 according to the data structure 900 with references to data in the memory banks 441 to 444. Each line, e.g., lines 901 to 905, in the data structure 900 correspond to a memory line 403, 404 in the TCAM. The columns 910 to 913 correspond to predetermined fields in the TCAM lines.

A vertex is represented as a single line in the TCAM 401 and an entry in the multi-bank memory 440 as follows:
- The current vertex field 910 in the TCAM line identifies the respective vertex in the graph. This may for example be a pointer or a unique number.
- The adjacent edges field 911 in the TCAM line identifies the edges adjacent to the respective vertex.
- The optional valid field 912 indicates whether the line is a valid entry in the TCAM. This field may be used for removing vertices from the graph by toggling the valid field to zero.
- The information field 913 comprising a reference to an entry in the multi-bank memory 440. The reference may for example be a pointer value to or physical address value of the entry.
- An information entry referred to by reference 913 in one of the memory banks of the multi-bank memory 440. The entry comprising further property information about the respective vertex.
For example, vertex V1 is represented by TCAM line 902. The information then refers to the entry {A11, A12,..., A1N} in memory bank 441.

An edge is also represented as a single line in the TCAM 401 and an entry in the multi-bank memory 440 as follows:
- The current edge field 910 in the TCAM line identifies the respective edge in the graph. This may for example be a pointer or a unique number.
- The adjacent vertices field 911 in the TCAM line identifies the vertices adjacent to the respective edge.
- The optional valid field 912 indicates whether the line is a valid entry in the TCAM. This field may be used for removing edges from the graph by toggling the valid field to zero.
- The information field 913 comprising a reference to an entry in the multi-bank memory 440. The reference may for example be a pointer value to or physical address value of the entry.
- An information entry referred to by reference 913 in one of the memory banks of the multi-bank memory 440. The entry comprising further property information about the respective edge.
For example, edge E1 is represented by TCAM line 901. The information then refers to the entry {B11, B12,..., A1M} in memory bank 442.

Advantageously, all edges adjacent to a certain vertex have a reference in the information field 913 to a different memory bank. For example, vertex 102 (V1) represented by line 902 has adjacent edges E1, E2, E8 represented by respective lines 901, 905 and 903. The reference in the information field 913 of these lines 901, 905 and 903 refer to entries in the respective memory banks 442, 443 and 444. Similarly, all vertices adjacent to a certain edge have a reference in the information field 913 to a different memory bank. For example, edge 103 (E8) represented by TCAM line 903 has adjacent vertices V1 and V6 represented by respective lines 902 and 904. The reference in the information field 913 of these lines 902 and 904 refer to entries in the respective memory banks 441 and 443.

Processing unit 410 and TCAM 401 are configured such that processing unit 410 can issue search lines 420 to the TCAM 401. TCAM 401 is then configured to send the result line 421 to the adjacency encoder 431. Encoder 431 is configured to retrieve the adjacent edges or vertices from the adjacent vertices/edges field 911 in the result line and to provide the result to the address decoder 432. The address decoder 432 is configured to derive the reference of the information field 913 from the received vertices or edges. The decoded addresses are then provided to the multi-banked memory 440 for lookup. The memory then provides the result 450 of the lookup back to the processing unit 410.

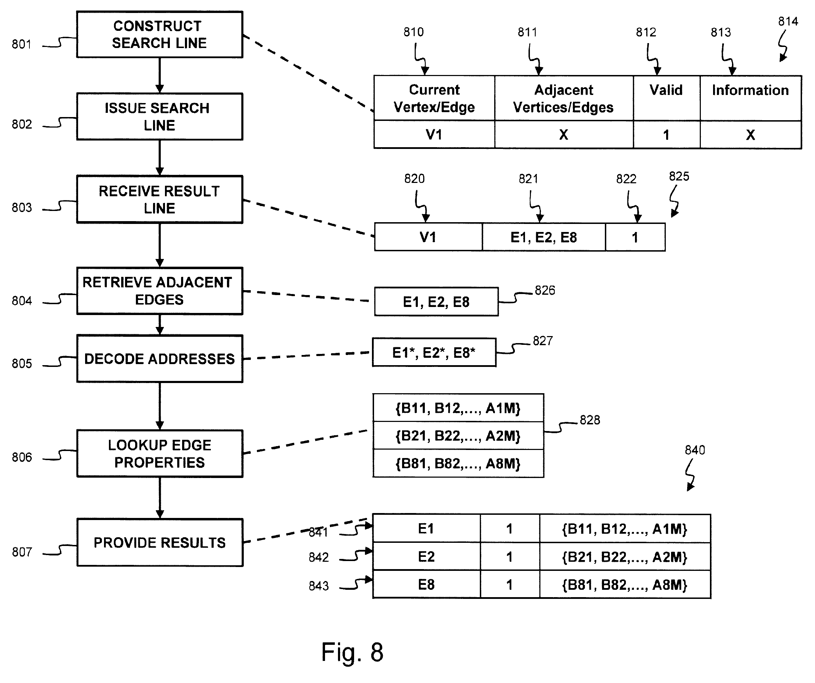

Fig. 8 illustrates steps 801 to 807 performed by computing system 400 when traversing a graph stored in the TCAM 401 and multibank memory 440. These steps are further illustrated by an example where the edges of vertex 102 of graph 100 are searched for. In a first step 801, the processing unit 410 constructs a TCAM search line 814 to a certain edge or vertex. In the search line 814, vertex V1 is specified in the current vertex field 810, the adjacent edges field 811 is marked as 'don't care' or X, the valid field 812 specifies '1' or thus valid and the information field 813 is also marked as 'don't care' or X. The search line 814 is then issued to the TCAM 401 in step 802 and the TCAM performs the search, i.e., it compares the search line 814 with all entries in the TCAM 401. A matched line is found in the TCAM 401 when the fields in the search line correspond with an entry in the TCAM 401. When a field in the search line is marked as X, then the corresponding field in the TCAM will always match the search. By specifying the valid field 812 as 'valid', the search will only return valid lines, i.e., vertices and edges belonging to graph 100.

In step 803, the adjacency encoder 431 receives the result 825 of the search form the TCAM 401, i.e., the line representing the respective vertex or edge that was searched for. Therefore, the result 825 will correspond with line 902 from the TCAM comprising fields 920 to 923. Subsequently, in step 904 the adjacency encoder 431 retrieves an identification of the adjacent edges 826 from the result line's adjacent edges field 921. The encoded edges 826 are then forwarded to the address decoder 432. Subsequently, in step 805, the address decoder decodes the references 827 to the entries in the multi-bank memory 440 from the results 826 from the adjacency encoder 431 and provides the references 827 to the memory 440. In subsequent step 806, memory 440 then looks up the edge property information 828 with the received references 827. Finally, in step 807, the results 840 comprising the identification of the different edges 841 to 843 and the edge property information are sent to the processing unit 410.

In a similar way, steps 801 to 807 may be used to search for vertices that are connected to a certain edge. This way, graph 100 may be further traversed starting from the retrieved edges 101, 103 and 105.

The advantage of the second embodiment is that only a single search must be performed in the TCAM 401 for traversing a step through the graph. Furthermore, when adjacent edges or adjacent vertices are stored in different memory banks 441-449, the lookup in step 806 can be performed in a single cycle by accessing the entries in the different memory banks in parallel. For example, entries 828 for edges E1, E2 and E8 can be looked up in parallel from respective memory banks 442, 443 and 445.

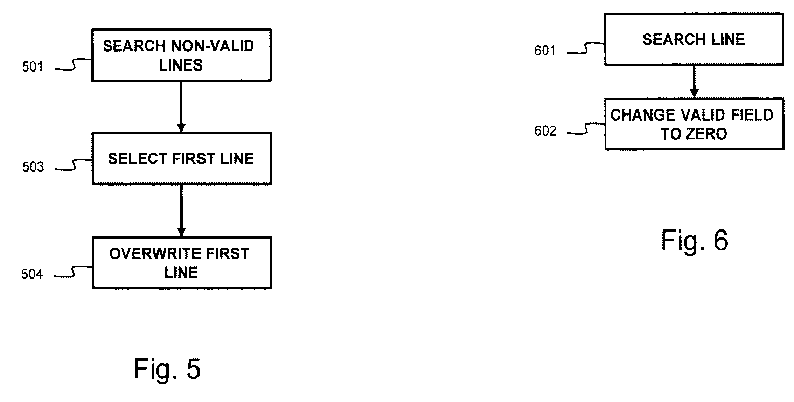

Fig. 6 illustrates steps performed by the computing system 300, 400 according to the above embodiments in order to remove a vertex or edge from the stored graph 100. In a first step 601, the respective vertex or edge is retrieved from the TCAM 301, 401 by issuing a search line specifying the respective vertex or edge in the current vertex/edge field 210, 910 and specifying the other fields 210, 211, 213 or 910, 911, 913 as 'don't care' or 'X'. Then, in the next step 602, the valid field is toggled to zero and thus 'non-valid' and this change is stored in the TCAM 301, 401.

Fig. 5 illustrates steps performed by the computing system according to the above embodiments in order to insert a new vertex or edge in the graph database. In a first step 501 a search is issued by the processing unit 310, 410 for non-valid lines in the TCAM 301 or 401. This is done by setting the valid field 212, 912 in the search line to '0' and thus to non-valid. All the other fields 210, 211, 213 or 910, 911, 913 are then set as 'don't care' or 'X'. This way, all lines which were previously removed, for example according to the steps illustrated in Fig. 6, and the lines that were initialized with the valid field set to '0' will be retrieved. Then, the first line from the results is selected in step 503. Thereupon, this line is overwritten in the TCAM 301, 401 with the new vertex or edge in step 504.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computing system (300, 400) comprising:
- a ternary content-addressable memory (301, 401), TCAM; and
- a processing unit (310, 410) configured to perform the step of storing a graph (100) comprising vertices (102, 104) and edges (101, 105, 103) in the TCAM.

2. The computing system (300, 400) according to claim 1 wherein the graph (100) is a network topology graph.

3. The computing system (300, 400) according to claim 1 wherein the storing further comprises:
- storing a vertex as a vertex line (202, 204, 902, 904) in the TCAM; and wherein the vertex line comprises a vertex field (210, 910) comprising an identification of the vertex and an adjacent edge field (211, 911) comprising and identification of one or more adjacent edges to the vertex; and
- storing an edge as an edge line (201, 205, 203, 901, 905, 903) in the TCAM; and wherein the edge line comprises an edge field (210, 910) comprising an identification of the edge and an adjacent vertex field (211, 911) comprising an identification of connected vertices.

4. The computing system (300, 400) according to claim 3 wherein the TCAM comprises search capabilities for wildcard matches.

5. The computing system (300, 400) according to claim 4 wherein the processing unit (310, 410) is further configured to perform the step of searching edges adjacent to a first vertex by issuing (702, 902) a first vertex search line (320, 420, 714, 814) to the TCAM (301, 401); and wherein the vertex field (710, 810) of the first vertex search line identifies the first vertex and wherein the adjacent edge field (711, 811) of the first vertex search line is indicated with a wildcard.

6. The computing system (300) according to claim 5 wherein the processing unit is further configured to perform the following steps:
- receiving (703), from the TCAM, a first result vertex line (321, 725) with the first vertex as the vertex field (720); and
- retrieving (704) from the adjacent edge field (721) of the first result vertex line (725) an identification of one or more first edges (726) adjacent to the first vertex; and
- issuing (705) for each of the one or more first edges (726) a first edge search line (731-733) to the TCAM; and
- receiving (706), from the TCAM, first result edge lines (741-743) with the respective first edges as the edge field.

7. The computing system (300) according to claim 3 wherein the vertex line (202, 204) further comprises a vertex property field (213) comprising vertex property information; and wherein the edge line (201, 205, 203) further comprises an edge property field (2130 comprising edge property information.

8. The computing system (400) according to claim 3 further comprising an addressable memory (440, 441-444); and wherein the vertex line (902, 904) further comprises a vertex property field (913) comprising a vertex property reference to vertex property information; and wherein the edge line (901, 905, 903) further comprises an edge property field (913) comprising an edge property reference to edge property information.and wherein the storing further comprises:
- storing vertex property information of the vertex in the addressable memory (441-444)); and
- storing a reference to the vertex property information of the vertex in the vertex property field (913) of the vertex; and
- storing edge property information of the edge in the addressable memory (441-444); and
- storing a reference to the edge property information of the edge in the edge property field (913) of the edge.

9. The computing system (400) according to claim 5 and 8 further comprising an address adjacency encoder (431) and address decoder (432); and wherein the address adjacency encoder (431) is configured to perform the step of:
- receiving (803), from the TCAM (401), a first result vertex line (825) with the first vertex as the vertex field (820); and
- retrieving (804) from the adjacent edge field (821) of the first result vertex line an identification (826) of one or more first edges adjacent to the first vertex;
and wherein the address decoder (432) is configured to perform the step of:
- decoding (805) the address (827) of the edge property information in the addressable memory from the identification (826) of one or more first edges adjacent to the first vertex;
and wherein the addressable memory (440) is further conjured to perform the steps of:
- looking up (806) the edge property information (828) of the one or more first edges adjacent to the first vertex by the address of the edge property information;
- providing (807) the edge property information (840) to the processing unit (410).

10. The computing system (400) according to claim 9 wherein the addressable memory (440) is a multi-bank (441-449) memory and wherein the addressable memory is configured to perform (806) multiple lookups in the multi-bank memory in parallel.

11. The computing system (400) according to claim 10 wherein the storing further comprises storing the edge property information of adjacent edges in different banks (441-449) of the multi-bank memory (440); and wherein the looking up (806) the edge property information is performed in parallel.

12. Method for storing a graph (100) comprising vertices (102, 104) and edges (101, 105, 103) on a computing system (300, 400) comprising::
- storing the graph in a ternary content-addressable memory (301, 401), TCAM.

13. A computer program product comprising a computer-executable instructions for performing the method according to claim 12 when the program is run on a computer.

14. A computer readable storage medium comprising the computer program product according to claim 13.

15. A data processing system (300, 400) programmed for carrying out the method according to claim 12.
